(19) **Europäisches Patentamt**
**European Patent Office**
**Office européen des brevets**

(11) **EP 2 476 056 B1**

(12) # FASCICULE DE BREVET EUROPEEN

(45) Date de publication et mention de la délivrance du brevet:
**06.12.2017 Bulletin 2017/49**

(51) Int Cl.:
*G06F 9/48* (2006.01)

(21) Numéro de dépôt: **10749869.3**

(22) Date de dépôt: **07.09.2010**

(86) Numéro de dépôt international:
**PCT/EP2010/063109**

(87) Numéro de publication internationale:
**WO 2011/029816 (17.03.2011 Gazette 2011/11)**

(54) **PROCEDE D'ORDONNANCEMENT TEMPS REEL D'UN ENSEMBLE DE TACHES MULTI-TRAMES NON CYCLIQUES**

VERFAHREN ZUR ECHTZEIT-REIHUNG EINES SATZES AN NICHTZYKLISCHEN MULTI-FRAME-TASKS

METHOD FOR THE REAL-TIME ORDERING A SET OF NON-CYCLICAL MULTI-FRAME TASKS

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **08.09.2009 FR 0904269**

(43) Date de publication de la demande:
**18.07.2012 Bulletin 2012/29**

(73) Titulaire: **Thales**
**92400 Courbevoie (FR)**

(72) Inventeurs:
• **TCHIDJO MOYO, Noel**
**F-92700 Colombes (FR)**
• **SEIGNOLE, Vincent**
**F-92100 Boulogne-billancourt (FR)**
• **LAFAYE, Frédéric**
**F-95100 Argenteuil (FR)**

(74) Mandataire: **Lucas, Laurent Jacques**
**Marks & Clerk France**
**Conseils en Propriété Industrielle**
**Immeuble Visium**
**22, Avenue Aristide Briand**
**94117 Arcueil Cedex (FR)**

(56) Documents cités:
• **JEFFAY K ET AL: "A theory of rate-based execution" REAL-TIME SYSTEMS SYMPOSIUM, 1999. PROCEEDINGS. THE 20TH IEEE PHOENIX, AZ, USA 1-3 DEC. 1999, LOS ALAMITOS, CA, USA,IEEE COMPUT. SOC, US LNKD-DOI:10.1109/REAL.1999.818858, 1 décembre 1999 (1999-12-01), pages 304-314, XP010366890 ISBN: 978-0-7695-0475-9**
• **ABDELZAHER T F ET AL: "A utilization bound for aperiodic tasks and priority driven scheduling" IEEE TRANSACTIONS ON COMPUTERS, IEEE SERVICE CENTER, LOS ALAMITOS, CA, US LNKD- DOI:10.1109/TC.2004.1261839, vol. 53, no. 3, 1 mars 2004 (2004-03-01), pages 334-350, XP011106105 ISSN: 0018-9340**
• **SHELBY FUNK: "Generalized Feasibility Analysis on Uniform Multiprocessors" WORK IN PROGRESS PROCEEDINGS OF THE 14TH EUROMICRO CONFERENCE ON REAL-TIME SYSTEMS, PISA, ITALY, JUNE 2007, [Online] juin 2007 (2007-06), pages 1-4, XP002579034 Extrait de l'Internet: URL:http://webster.cs.uga.edu/~shelby/pubs /UnifFeasibility.pdf> [extrait le 2010-04-21]**
• **ALBERS K ET AL: "An event stream driven approximation for the analysis of real-time systems" PROCEEDINGS OF THE EUROMICRO CONFERENCE ON REAL-TIME SYSTEMS, XX, XX, 30 juin 2004 (2004-06-30), pages 187-195, XP002383592**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

- BARUAH S ET AL: "The Feasibility Analysis of Multiprocessor Real-Time Systems" REAL-TIME SYSTEMS, 2006. 18TH EUROMICRO CONFERENCE ON DRESDEN, GERMANY 05-07 JULY 2006, PISCATAWAY, NJ, USA,IEEE LNKD-DOI:10.1109/ECRTS.2006.29, 5 juillet 2006 (2006-07-05), pages 87-96, XP010927453 ISBN: 978-0-7695-2619-5
- TAKADA H ET AL: "Schedulability of generalized multiframe task sets under static priority assignment" REAL-TIME COMPUTING SYSTEMS AND APPLICATIONS, 1997. PROCEEDINGS., FOUR TH INTERNATIONAL WORKSHOP ON TAIPEI, TAIWAN 27-29 OCT. 1997, LOS ALAMITOS, CA, USA,IEEE COMPUT. SOC, US LNKD- DOI:10.1109/RTCSA.1997.629177, 27 octobre 1997 (1997-10-27), pages 80-86, XP010251850 ISBN: 978-0-8186-8073-1
- SINGHOFF F ET AL: "Cheddar: a flexible real time scheduling framework" ADA LETTERS ACM USA, vol. 24, no. 4, décembre 2004 (2004-12), pages 1-8, XP002579035 ISSN: 0736-721X

**Description**

La présente invention a pour objet un procédé d'ordonnancement temps réel de tâches logicielles multi-trames. Elle concerne le domaine des processeurs temps-réels, par exemple des processeurs de traitement de signal, sur lesquels sont exécutées une pluralité de fonctions, encore appelées tâches logicielles, qui peuvent être concurrentes, c'est-à-dire être appelées simultanément. L'invention concerne plus particulièrement la problématique de l'ordonnancement temps réel des tâches logicielles exécutées par une ou plusieurs applications logicielles sur un ou plusieurs processeurs en parallèle.

Une tâche multi-trames désigne une tâche ou fonction logicielle qui exécute un traitement sur une pluralité de trames de données auxquelles sont associées un temps d'exécution, une échéance ainsi qu'un temps de garde vis-à-vis de la trame suivante. Le temps d'exécution C est le temps nécessaire pour exécuter, sur ladite trame de données, le traitement fonctionnel défini par la tâche correspondante sur un processeur donné. Il dépend à la fois de la complexité du traitement à exécuter et des ressources du processeur, notamment de sa fréquence de fonctionnement. L'échéance D correspond au temps relatif qui s'écoule entre l'activation d'une tâche et le temps au bout duquel l'exécution de cette tâche doit être finalisée. L'échéance dépend notamment de contraintes temporelles liées à l'application logicielle ou au système mis en oeuvre qui utilise cette application. Le temps de garde P correspond au temps minimum qui s'écoule entre deux appels successifs à une même tâche.

Un des problèmes que cherche à résoudre l'invention est de garantir la faisabilité temps réelle de l'implémentation d'un ensemble de tâches multi-trames, qui définissent ensemble une application ou un système, ayant des paramètres de temps d'exécution, d'échéance et de temps de garde donnés sur un processeur donné. A cet effet, le problème technique à résoudre concerne l'ordonnancement temps réel de ces tâches sur ce processeur. Afin de garantir que la conception des tâches logicielles est valide d'une implémentation temps-réelle, il est nécessaire de tester si les limites temporelles ne sont jamais dépassées en vérifiant notamment que chaque tâche s'exécute bien avant son échéance. La résolution de ce problème technique permet de valider le bon fonctionnement de l'ordonnanceur qui est mis en oeuvre par le système d'exploitation associé au processeur.

Un ordonnanceur est un composant du système d'exploitation qui a pour fonction de déterminer l'ordre dans lequel les tâches ou processus vont être exécutés sur un processeur de façon à respecter le temps-réel. L'utilisation d'un ordonnanceur permet d'exécuter en parallèle plusieurs tâches ou processus sur un seul processeur en partageant ses ressources temporellement. De cette façon, l'exécution en temps réel des tâches est possible. Cependant, il existe des cas de figure où la spécification des tâches logicielles à exécuter est telle qu'elle ne permet pas leur exécution simultanée en temps réel, dans ce cas l'ordonnanceur ne pourra pas fonctionner correctement car il sera amené à résoudre un problème qui ne possède pas de solution. Ces scénarios ne sont pas forcément aisément détectables et évitables notamment dans le cas d'applications complexes qui utilisent plusieurs tâches concurrentes elles mêmes exécutant un traitement sur plusieurs trames de données ayant des contraintes d'exécution bornées dans le temps. Il est donc important de pouvoir détecter ces cas de figure pendant la phase de conception de l'architecture globale du système afin de redéfinir les paramètres des tâches logicielles que l'on souhaite déployer sur un processeur donné si ceux-ci ne sont pas compatibles d'une exécution temps réelle.

Une politique d'ordonnancement connue de l'Homme du métier est la méthode d'ordonnancement à priorité dynamique connue sous l'abréviation anglo-saxonne EDF (« Earliest Deadline First »). Cette méthode consiste à attribuer une priorité dynamique à chaque tâche ou processus en fonction de l'échéance de ce dernier. Plus l'échéance d'une tâche est proche, plus sa priorité est grande. L'invention se positionne notamment dans le cadre de cette méthode d'ordonnancement.

Le document [1] décrit le concept de tâches multi-trames et propose de modéliser un ensemble de tâches logicielles temps-réelles à l'aide de ce concept. Une tâche multi-trame est une tâche ou fonction logicielle qui exécute un traitement sur une pluralité de trames de données caractérisées par les trois paramètres de temps d'exécution E, échéance D, et temps de garde P introduits précédemment dans ce document, et pour lesquelles, de plus, le temps d'exécution E est variable d'une trame à une autre.

Le document [2] reprend ce concept en le généralisant à un ensemble de tâches multi-trames pour lesquelles l'échéance D et le temps de garde P sont également variables. Un test de faisabilité associé à une méthode d'ordonnancement à priorité dynamique (telle que la méthode EDF) est proposée dans le document [2]. Cette méthode est basée sur la construction d'une fonction d'exigence bornée dépendant des paramètres E,D et P et permettant de valider la faisabilité de l'exécution temps-réelle d'une pluralité de tâches logicielles sur un processeur donné.

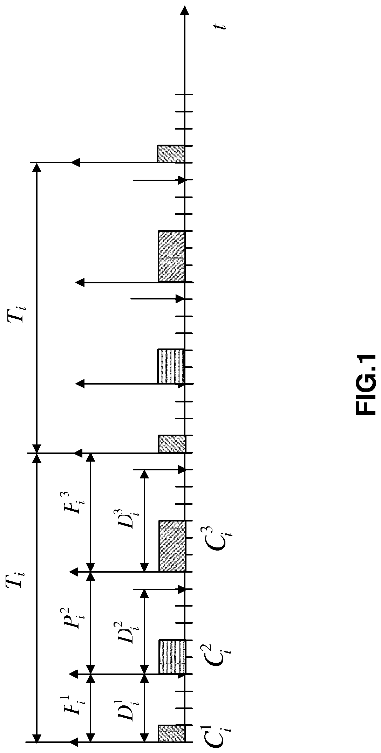

La solution proposée par le document [2] se limite au cas particulier où il existe une périodicité, encore appelée cycle, dans l'appel successif des tâches et l'enchaînement temporel du traitement des trames. Dans ce cas, il est possible de trouver un motif de répétition qui définit entièrement le séquencement temporel de l'exécution d'une tâche sur une période de temps donnée. Un exemple d'un tel cas de figure est décrit sur la figure 1. Une tâche logicielle i qui exécute un traitement sur trois types de trames de données différentes caractérisées chacune par les trois paramètres de temps d'exécution $C_i^1$, $C_i^2$, $C_i^3$, d'échéance $D_i^1$, $D_i^2$, $D_i^3$ entre l'instant où la tâche est activée et l'instant où elle doit avoir terminé le traitement de la trame pour respecter les contraintes de temps-réel et de temps de garde $P_i^1$, $P_i^2$, $P_i^3$ entre deux appels successifs à cette tâche. Au bout d'un temps de cycle $T = P_i^1 + P_i^2 + P_i^3$, le motif temporel d'exécution de la tâche i se répète périodiquement comme illustré sur la figure 1. La tâche i est alors qualifiée de tâche multi-trames cyclique.

Un tel cas de figure correspond, par exemple, au cas d'un dispositif de compression vidéo de type MPEG (Motion Picture Expert Group) qui peut manipuler trois types de trames de données différentes connues de l'Homme du métier sous l'identifiant trames I, P ou B, et qui sont transmises le plus souvent selon un motif temporel cyclique.

La fonction d'exigence introduite dans [2] et permettant de tester la faisabilité d'un ensemble de tâches multi-trames utilise la période ou cycle T pour résoudre le problème d'ordonnancement des tâches et se limite donc au cas de tâches cycliques.

On connait par ailleurs les méthodes décrites dans les documents suivants :

-    Abdelzaher T F et al : « A utilization bound for aperiodic tasks and priority driven scheduling », IEEE transaction on computers, mars 2004,
-    Albers K et al: "An event stream driven approximation for the analysis of real time systems", Proceedings of the euromicro conference on real time systems, juin 2004,
-    Takada H et al: "schedulability of generalized multiframe task sets under static priority assignment", Real Time computing systems and applications, 1997

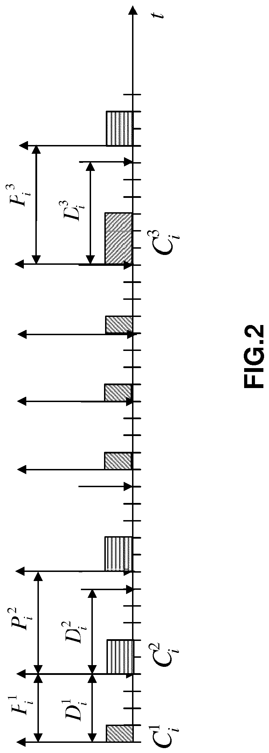

L'invention propose une solution permettant de résoudre le problème de faisabilité d'un ensemble de tâches logicielles multi-trames lorsque celles-ci ne présentent aucun motif de répétition temporel. En particulier ce cas de figure correspond à un traitement aléatoire des trames de données lorsqu'on ne connaît pas à l'avance leur instant d'arrivée. Un exemple d'un tel scénario est schématisé sur la figure 2. La même tâche logicielle i que celle illustrée à la figure 1 est représentée mais cette fois dans un cas d'application pour lequel les trois types de trames de données ne sont pas traitées selon un schéma temporel cyclique car elles arrivent dans un ordre aléatoire. Ce cas de figure correspond, par exemple, à un dispositif de modulation OFDMA (Orthogonal Frequency Division Multiple Access) qui génère des trames de données allouées à différents utilisateurs et possédant donc des caractéristiques différentes et qui sont transmises dans un ordre non prédictible.

A cet effet l'invention a pour objet un procédé d'ordonnancement à priorité dynamique temps-réel d'une application exécutée sur au moins un processeur, la dite application étant composée d'une pluralité m de tâches logicielles exécutant au moins un traitement sur une pluralité N de trames de données successives, chacune desdites tâches i étant définies au moins, pour chacune desdites trames j, par un temps d'execution $C_i^j$, une échéance d'exécution $D_i^j$ et un temps de garde $P_i^j$ vis-à-vis de la trame j+1 suivante, ledit temps de garde $P_i^j$ étant supérieur ou égal à ladite échéance $D_i^j$, ledit procédé étant caractérisé en ce qu'il comprend au moins les étapes suivantes:

○ Pour chaque tâche i, calculer les rapports $\dfrac{C_i^j}{D_i^j}$ entre le temps d'exécution $C_i^j$ de chaque trame j et l'échéance correspondante $D_i^j$,

○ Pour chaque tâche i, rechercher le maximum sur l'ensemble desdites trames j desdits rapports $\max\left(\dfrac{C_i^j}{D_i^j}\right)$,

○ Comparer la somme $\displaystyle\sum_{i=0}^{m-1} \max_{0 \le j \le N-1}\left(\dfrac{C_i^j}{D_i^j}\right)$ sur toutes lesdites tâches i desdits maximums au nombre p de processeurs fonctionnant en parallèle sur lesquels la charge de calcul totale de ladite application temps-réelle est répartie,

○ Si ladite somme $\sum_{i=0}^{m-1} \max_{0 \le j \le N-1} (\frac{C_i^j}{D_i^j})$ est inférieure ou égale au nombre p de processeurs alors conclure à la faisabilité de l'exécution temps-réelle de l'ensemble desdites tâches logicielles réparties sur lesdits processeurs et associer une priorité dynamique d'exécution à la tâche i en fonction de son échéance d'exécution $D_i^j$ de façon à ce qu'à un instant donné, la tâche qui possède la priorité la plus élevée est celle dont l'échéance $D_i^j$ est la plus proche temporellement,

○ Si ladite somme $\sum_{i=0}^{m-1} \max_{0 \le j \le N-1} (\frac{C_i^j}{D_i^j})$ est strictement supérieure au nombre p de processeurs, rejeter la tâche i et/ou redéfinir ses paramètres de temps d'exécution $C_i^j$ et d'échéance d'exécution $D_i^j$ de façon à satisfaire l'inégalité

$$\sum_{i=0}^{m-1} \max_{0 \le j \le N-1} (\frac{C_i^j}{D_i^j}) \le p \; .$$

Dans un mode de réalisation de l'invention, lesdites trames de données sont séquencées dans un ordre aléatoire et sans respecter un motif temporel cyclique.

Dans un mode de réalisation de l'invention, lesdites tâches exécutent sur lesdites trames de données des fonctions de traitement de signal et que lesdits processeurs sont des processeurs numériques de signal (DSP).

Dans un mode de réalisation de l'invention, un seul processeur à fréquence variable est utilisé et ledit procédé comporte en plus les étapes suivantes :

○ Si l'inégalité suivante $\sum_{i=0}^{m-1} \max_{0 \le j \le N-1} (\frac{C_i^j}{D_i^j}) \le 1$ n'est pas respectée alors multiplier par un facteur $\delta$ au moins égal à $\sum_{i=0}^{m-1} \max_{0 \le j \le N-1} (\frac{C_i^j}{D_i^j})$ la fréquence dudit processeur,

○ Si ladite fréquence multipliée par ledit facteur $\delta$ est inférieure ou égale à la fréquence maximale de fonctionnement dudit processeur alors associer une priorité dynamique d'exécution à la tâche i en fonction de son échéance d'exécution $D_i^j$ de façon à ce qu'à un instant donné, la tâche qui possède la priorité la plus élevée est celle dont l'échéance $D_i^j$ est la plus proche temporellement,

○ Si ladite fréquence multipliée par ledit facteur $\delta$ est supérieure à la fréquence maximale de fonctionnement dudit processeur alors rejeter la tâche i et/ou redéfinir ses paramètres de temps d'exécution $C_i^j$ et d'échéance d'exécution $D_i^j$ de façon à satisfaire l'inégalité $\sum_{i=0}^{m-1} \max_{0 \le j \le N-1} (\frac{C_i^j}{D_i^j}) \le 1 \; .$

L'invention a également pour objet un dispositif d'ordonnancement pour une application temps-réelle exécutée sur au moins un processeur à fréquence de fonctionnement fixe ou variable, la dite application étant composée d'une pluralité m de tâches logicielles exécutant au moins une fonction sur une pluralité N de trames de données successives, ledit dispositif étant caractérisé en ce qu'il comporte des moyens pour mettre en oeuvre le procédé d'ordonnancement décrit précédemment.

D'autres caractéristiques apparaîtront à la lecture de la description détaillée donnée à titre d'exemple et non limitative qui suit faite en regard de dessins annexés qui représentent :

La figure 1, un schéma d'un exemple de tâches multi-trames cycliques et de leur exécution au cours du temps,
La figure 2, un schéma d'un exemple de tâches multi-trames non cycliques et de leur exécution au cours du temps,
La figure 3, un synoptique du procédé selon l'invention,
La figure 4, un exemple d'architecture d'un système temps-réel pour lequel l'invention s'applique.
La figure 5, un exemple de dispositif d'ordonnancement selon l'invention utilisé pour garantir la sureté de fonctionnement temps réel d'une application s'exécutant sur une plateforme comprenant plusieurs processeurs identiques.

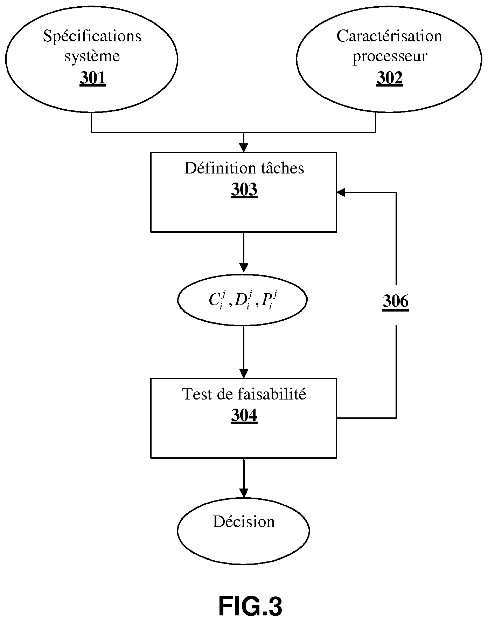

La figure 3 schématise un diagramme représentant les étapes du procédé d'ordonnancement de tâches logicielles selon l'invention. Le procédé s'intègre dans le cadre d'un système temps-réel exécutant notamment les tâches logicielles que l'on souhaite ordonnancer sur un processeur donné. Le système temps-réel spécifié 301 permet de définir un ensemble de tâches logicielles qui correspondent à des fonctions exécutant chacune un sous ensemble des traitements nécessaires au fonctionnement dudit système. La décomposition du système en tâches est généralement faite lors d'une phase de conception et dépend notamment des spécifications du système, en particulier le type de traitements à effectuer et leurs contraintes temporelles. Les tâches composant le système doivent être exécutées sur un processeur, par exemple un processeur de traitement de signal de type DSP (« Digital Signal Processing »), qui comporte également des caractéristiques 302 intrinsèques, par exemple sa fréquence de fonctionnement ou vitesse d'exécution, lesquelles impactent également la conception des tâches. Une étape 303 de définition des tâches permet donc de générer un ensemble de tâches i pour lesquelles trois paramètres sont définis pour chaque trame de données j manipulée par la tâche multi-trame i. Ces paramètres sont le temps d'exécution $C_i^j$ de la tâche i pour la trame de donnée j, son échéance $D_i^j$ et son temps de garde $P_j$.

Un test de faisabilité 304 selon l'invention, est ensuite appliqué afin de déterminer si l'ensemble des tâches conçues lors de l'étape 303 est ordonnançable sur le processeur choisi selon la politique d'ordonnancement EDF.

Pour un nombre m de tâches, chacune générant un nombre N de trames de données, le test de faisabilité consiste à vérifier la relation suivante :

$$\sum_{i=0}^{m-1} \max_{0 \le j \le N-1} \left(\frac{C_i^j}{D_i^j}\right) \le 1 \quad (1)$$

Si la relation (1) est vérifiée, l'ensemble des tâches considérées est bien ordonnançable ce qui signifie que toutes les tâches pourront être exécutées avant leur échéance en respectant le temps-réel.

Dans le cas contraire, une redéfinition 306 des tâches est nécessaire.

De façon dynamique, le procédé selon l'invention s'applique également lorsqu'une nouvelle tâche est créée et que l'on souhaite valider sa faisabilité conjointement à l'ensemble de tâches déjà conçues. L'application du test selon la relation (1) en intégrant cette nouvelle tâche permet de valider son intégration ou au contraire de la rejeter et de redéfinir ses caractéristiques afin que les paramètres $( C_i^j, D_i^j, P_i^j )$ respectent la relation (1).

Le temps d'exécution $C_i^j$ peut être déterminé soit en estimant à priori la complexité des traitements exécutés par la tâche i sur la trame j soit en mesurant, unitairement, le temps nécessaire à l'exécution de cette tâche seule sur le processeur choisi. Un moyen d'adapter le temps d'exécution afin de permettre à la tâche i de respecter la relation (1) et donc d'être ordonnançable, est d'optimiser la mise en oeuvre des traitements algorithmiques afin d'accélérer leur vitesse d'exécution.

La relation (1) est une condition suffisante pour que l'ensemble des tâches qui satisfont cette relation soit ordonnancable selon une politique d'ordonnancement EDF, c'est-à-dire que la priorité la plus élevée est accordée à la tâche qui présente l'échéance la plus proche. Le paragraphe suivant vise à démontrer que la vérification de la relation (1) suffit à assurer la faisabilité d'une implémentation temps-réelle des tâches multi-trames non cycliques et suffit donc à résoudre le problème technique mentionné au début de ce document.

Pour s'assurer du respect de l'exécution temps-réelle d'une pluralité de tâches concurrentes qui peuvent s'exécuter à des instants non prédictibles, il suffit de se placer dans le pire cas pour lequel toutes les tâches sont activées en même temps à un instant $t_0$. Ce cas représente la situation la plus contraignante puisque le processeur est sollicité par toutes les tâches en même temps. En considérant uniquement le premier appel de chaque tâche correspondant à la première trame à traiter on vérifie alors que si le temps réel est respecté pour cette première activation alors il le sera aussi pour les appels suivants qui n'auront pas lieu simultanément et donc représenteront une situation moins contraignante.

Pour le premier appel de chaque tâche, on considère tout d'abord la configuration pour laquelle chaque tâche traite une trame $x_i$ correspondant à la plus grande criticité ou urgence d'exécution ce qui se traduit par une maximisation du rapport entre le temps nécessaire pour exécuter le traitement associé à cette trame et l'échéance d'exécution:

$$\frac{C_i^{x_i}}{D_i^{x_i}} = \max_{0 \leq j \leq N-1} \left(\frac{C_i^j}{D_i^j}\right) \quad (2)$$

La relation (1) devient donc:

$$\sum_{i=0}^{m-1} \frac{C_i^{x_i}}{D_i^{x_i}} \leq 1 \quad (1')$$

Si l'on suppose que $D_{i-1}^{x_{i-1}} \leq D_i^{x_i}$ pour toute valeur de i, ce qui revient à trier les tâches par ordre d'échéance croissant ce qui est toujours possible, alors pour que l'ensemble des tâches soit ordonnançables selon une politique d'ordonnancement de type EDF, il suffit que chaque tâche i respecte la relation suivante :

$$\sum_{k=0}^{i} C_k^{x_k} \leq D_i^{x_i} \quad (3)$$

En effet à chaque échéance $D_i^{x_i}$, toutes les tâches précédentes doivent avoir été exécutées pour que le temps-réel soit correctement respecté. Par tâches précédentes on entend les tâches dont l'échéance est antérieure à l'échéance $D_i^{x_i}$.

On cherche donc à montrer que la relation (1') implique la relation (3) pour prouver le test de faisabilité selon l'invention.

La relation (1') équivaut, en multipliant chaque membre de l'inéquation par $D_i^{x_i}$, à :

$$C_i^{x_i} + \sum_{k=0; k \neq i}^{m-1} D_i^{x_i} \frac{C_k^{x_k}}{D_k^{x_k}} \leq D_i^{x_i} \quad (4)$$

Or comme tous les termes de la somme sont des nombres positifs, on peut en déduire que :

$$C_i^{x_i} + \sum_{k=0}^{i-1} D_i^{x_i} \frac{C_k^{x_k}}{D_k^{x_k}} \leq C_i^{x_i} + \sum_{k=0; k \neq i}^{m-1} D_i^{x_i} \frac{C_k^{x_k}}{D_k^{x_k}} \quad (5)$$

Et donc

$$C_i^{x_i} + \sum_{k=0}^{i-1} D_i^{x_i} \frac{C_k^{x_k}}{D_k^{x_k}} \leq D_i^{x_i} \quad (6)$$

Or, comme $D_{i-1}^{x_{i-1}} \leq D_i^{x_i}$ , on a donc pour tout k <i, $D_k^{x_k} \leq D_i^{x_i}$ ou encore

$$1 \leq \frac{D_i^{x_i}}{D_k^{x_k}} \ .$$

De la relation (6) on peut donc déduire que la relation (3) est bien respectée, c'est-à-dire que :

$$\sum_{k=0}^{i} C_k^{x_k} \leq D_i^{x_i}$$

La démonstration précédente prouve le test de faisabilité selon l'invention dans le cas ou les tâches considérées ne traitent que des trames de type $x_i$ qui présentent un maximum de criticité.

Dans une seconde étape, on considère la configuration pour laquelle lors du premier appel, chaque tâche traite une trame quelconque $y_i$ moins critique que la trame $x_i$, et qui vérifie donc la relation:

$$\frac{C_i^{y_i}}{D_i^{y_i}} \leq \frac{C_i^{x_i}}{D_i^{x_i}} \ (7)$$

Des relations (1) et (7) on obtient que :

$$\sum_{i=0}^{m-1} \frac{C_i^{y_i}}{D_i^{y_i}} \leq 1 \ (8)$$

et on peut ensuite appliquer le même raisonnement que précédemment pour démontrer que la relation (8) implique la relation suivante :

$$\sum_{k=0}^{i} C_k^{y_k} \leq D_i^{y_i}$$

La démonstration précédente prouve donc, par le biais d'étapes successives, que le test mis en oeuvre par la relation (1) est une condition suffisante pour que les tâches qui respectent cette relation soient ordonnançables selon une politique d'ordonnancement consistant à attribuer une priorité d'exécution à chaque tâche en fonction de son échéance (politique d'ordonnancement EDF).

De façon similaire, le test de faisabilité défini par la relation (1) peut être étendu à l'exécution de m tâches logicielles sur un nombre p, au moins égal à 2, de processeurs identiques fonctionnant en parallèle au sein d'un dispositif multi-processeurs. Dans ce cas, le test de faisabilité garantissant l'ordonnancement temps réel de m tâches multi-trames sur p processeurs fonctionnant en parallèle est déterminé en vérifiant la relation suivante :

$$\sum_{i=0}^{m-1} \max_{0 \leq j \leq N-1} (\frac{C_i^j}{D_i^j}) \leq p \ (9)$$

La relation (9) est une généralisation de la relation (1) pour un nombre p supérieur à 1 de processeurs.

La relation (9) se démontre de façon analogue à la relation (1). Une condition suffisante pour que toutes les tâches soient ordonnançables sur les p processeurs disponibles est obtenue en vérifiant la relation suivante pour tout i < m:

$$\frac{\sum_{k=0}^{i} C_k^{x_k}}{p} \leq D_i^{x_i} \quad (10)$$

En effet à chaque échéance $D_i^{x_i}$, toutes les tâches précédentes doivent avoir été exécutées en répartissant leur charge d'exécution sur les p processeurs disponibles pour que le temps-réel soit correctement respecté. On démontre ensuite de façon analogue au cas d'un processeur unique, que la relation (9) implique la relation (10) et que donc le respect de la relation (9) suffit à valider que toute les tâches seront bien exécutées en respectant le temps-réel.

Le procédé selon l'invention peut être mis en oeuvre par un dispositif d'ordonnancement ou ordonnanceur intégré dans un système d'exploitation. L'ordonnanceur réalise une méthode d'ordonnancement de type EDF et lors du rajout d'une tâche dynamique, la création de cette tâche est rejetée si elle ne vérifie pas le test de faisabilité de la relation (1) pour le cas d'un processeur unique ou de la relation (9) pour le cas d'une pluralité de processeurs. Ainsi, un verrou est ajouté à l'ordonnanceur, permettant de garantir le respect du temps-réel et le bon fonctionnement de l'application qui est exécutée.

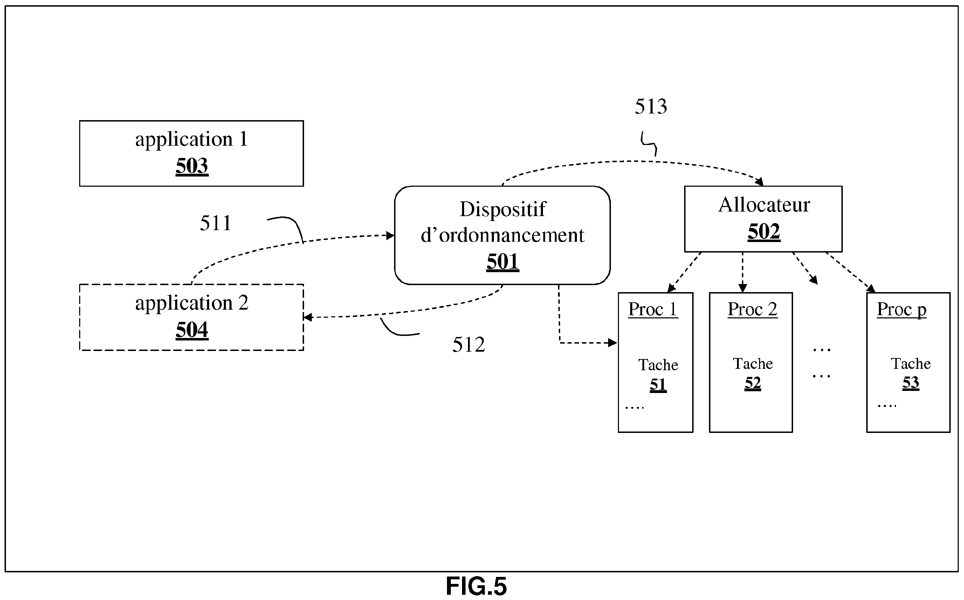

La figure 5 illustre un exemple de dispositif d'ordonnancement selon l'invention utilisé pour garantir la sureté de fonctionnement temps réel d'une application s'exécutant sur une plateforme comprenant plusieurs processeurs identiques.

Un dispositif d'ordonnancement 501 a pour fonction de garantir l'exécution temps-réelle d'une ou plusieurs applications logicielles 503,504. A un instant donné, une application 504 crée 511 une tâche logicielle dont les caractéristiques de temps d'exécution, échéance d'exécution et temps de garde sont transmises au dispositif d'ordonnancement 501. Ce dernier exécute le procédé selon l'invention tel que décrit précédemment en prenant en compte la création 511 de cette nouvelle tâche ainsi que l'ensemble des tâches 51,52,53 déjà exécutées sur un ensemble de processeurs Proc1,Proc2,ProcP disponibles. Si le dispositif d'ordonnancement 501 conclue à la non faisabilité d'une exécution temps-réelle de la nouvelle tâche créée 511, il rejette 512 cette tâche dans le but de garantir la sureté de fonctionnement de l'application 504 et renvoi un message à ladite application 504 afin de lui permettre de redéfinir les caractéristiques de ladite tâche 511. Si au contraire, le dispositif d'ordonnancement 501 conclue à la faisabilité de l'exécution temps-réelle de la tâche 511, il autorise 513 l'ajout de cette nouvelle tâche et communique cette information à un dispositif d'allocation 502 qui positionne la tâche 511 pour une exécution sur l'un des processeurs disponibles selon une politique d'ordonnancement de type EDF, c'est-à-dire, qu'à un instant donné, un processeur dont les ressources sont disponibles sélectionne parmi toutes les tâches à exécuter, celle dont l'échéance d'exécution est la plus proche.

Dans une variante de réalisation de l'invention pour laquelle un seul processeur est utilisé, et que ce processeur possède la capacité d'avoir une fréquence variable permettant le changement de cette fréquence pendant l'exécution des tâches, le procédé selon l'invention contient de plus les étapes suivantes.

Si la relation (1) n'est pas respectée, on note $\delta = \sum_{i=0}^{m-1} \max_{0 \leq j \leq N-1} \left(\frac{C_i^j}{D_i^j}\right)$, $\delta$ est donc supérieur à un. Afin de garantir le respect du temps-réel, le dispositif d'ordonnancement 501 déclenche 514 la multiplication par un facteur $\delta$ de la fréquence courante de fonctionnement du processeur. Si la nouvelle fréquence obtenue ne dépasse pas la fréquence maximale de fonctionnement du processeur, il autorise 513 l'ajout de la nouvelle tâche. En effet, la multiplication par un facteur $\delta$ de la fréquence d'exécution du processeur est équivalente à la division de tous les temps d'exécution $C_i^j$ par cette même quantité $\delta$. De ce fait, la somme $\sum_{i=0}^{m-1} \max_{0 \leq j \leq N-1} \left(\frac{C_i^j}{D_i^j}\right)$ devient alors égale à 1 et respecte donc l'inégalité (1). D'une façon plus générale, on voit que pour respecter l'inégalité (1) il suffit d'augmenter la fréquence du processeur d'un facteur au moins égal à $\delta$.

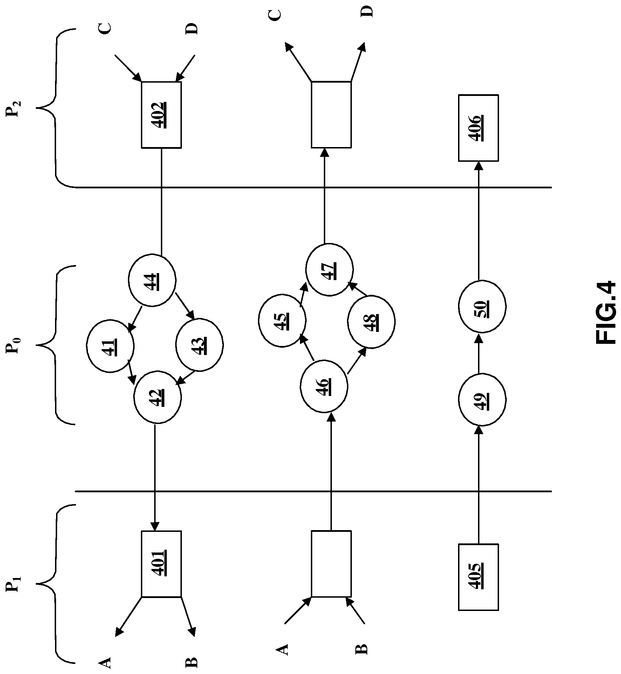

Le procédé selon l'invention s'applique notamment pour la conception de systèmes de communications multi utilisateurs. Un système de transmission est, la plupart du temps, utilisé par plusieurs utilisateurs et permet de véhiculer également une pluralité de services différents possédant des caractéristiques dont l'impact, notamment, sur les trames de données et le temps d'exécution des tâches est différent. Une application de transmission de contenus vidéo peut par exemple utiliser des trames de données de longueur plus importantes qu'une application de messagerie textuelle. La taille des trames a un impact sur le temps d'exécution de la tâche associée. De plus, l'instant d'arrivée, et donc de traitement, des trames de données dans un système de communication bidirectionnel est le plus souvent aléatoire car déterminé par des évènements déclenchés par les utilisateurs. Cette diversité de caractéristiques des trames de données permet d'appliquer pour la conception d'une architecture d'un système de communications, un modèle de tâches multi-trames ainsi que le procédé d'ordonnancement selon l'invention utilisant ce modèle. Un exemple d'une architecture de système temps-réel pour lequel l'invention s'applique est illustré à la figure 4. Un système de communication temps-réel entre plusieurs utilisateurs A,B,C,D est représenté comportant 3 processeurs $P_0$,$P_1$,$P_2$. On s'intéresse à l'ordonnancement des tâches exécutées sur le processeur $P_0$. Ce dernier exécute un ensemble de tâches 41,42,43,44 associées à des fonctions élémentaires d'une chaine de réception de données émises par les utilisateurs C et D par l'intermédiaire d'une application 402 vers les utilisateurs A et B. La chaine de réception composée des tâches 41,42,43,44 reçoit des paquets de données dans un ordre aléatoire, la réception de ces paquets déclenche des appels successifs aux tâches de réception 41,42,43,44 qui exécutent, par exemple, des traitements de démodulation et/ou de décodage canal des données avant de les transmettre à l'application réceptrice 401.

En parallèle de cette première chaine de transmission, une chaine d'émission est également implémentée sur le processeur $P_0$ pour permettre aux utilisateurs A et B de communiquer à leur tour avec les utilisateurs C et D. Un ensemble de tâches 45,46,47,48 exécutent des traitements permettant de mettre en forme les données à émettre, par exemple une fonction de modulation de données ou de codage canal. Les tâches 45,46,47,48 composant la chaîne d'émission sont exécutées de façon indépendantes et asynchrones aux tâches 41,42,43,44 de la chaine de réception. De même un lien de signalisation permet de transmettre des informations relatives au contrôle et à la mise en oeuvre des moyens d'émission/réception. Ce lien est implémenté entre deux applications 405,406 et fait intervenir l'exécution de deux tâches 49,50 sur le processeur $P_0$.

Le procédé selon l'invention s'applique à ce type de système temps-réel puisque chaque tâche est multi-trames et est exécutée dans un ordre non prédictible du point de vue du processeur $P_0$ sur lequel elles s'exécutent.

Un autre cas d'application pour lequel l'invention s'applique est le cas où une tâche exécute un traitement sur un seul type de trame de données, mais le processeur sur lequel s'exécute cette tâche possède la capacité de moduler sa consommation, par exemple en faisant varier sa fréquence d'exécution. Dans ce cas, si plusieurs modes de consommation sont disponibles, le temps d'exécution d'une même trame de données sera différent pour chacun de ces modes. Le passage d'un mode de consommation à un autre peut être effectué au cours du temps de façon non prédictible, notamment en fonction de contraintes liées au système. Le procédé selon l'invention décrit précédemment s'applique bien dans ce cas de figure puisqu'on est en présence d'une ou plusieurs tâches logicielles qui exécute un traitement sur une trame de données dont le temps d'exécution, notamment, va varier au cours du temps en fonction du mode de consommation du processeur. La conception d'un tel système peut être validée et son exécution temps réelle garantie à l'aide de l'invention.

De façon générale, l'invention s'applique à tout ensemble de tâches logicielles concurrentes provenant de sources différentes et exécutant dans un ordre non prédictible un traitement sur un ensemble de trames de données dont les temps d'exécution, d'échéance et les temps de garde sont variables.

L'invention présente notamment l'avantage de permettre la validation des choix de conception d'une application ou d'un système temps-réel et de garantir la faisabilité de l'exécution de ce système dans les contraintes de délai auquel il est soumis. En particulier l'invention permet de garantir le bon fonctionnement d'un ordonnanceur à priorité dynamique tel qu'un ordonnanceur exécutant la méthode EDF et en particulier de garantir que le système ne sera jamais surchargé, c'est-à-dire que son taux d'utilisation ne sera jamais supérieur à 100%.

**Références**

**[1]** A.K.Mok et D.Chen. A multiframe model for real time tasks. Proceedings of IEEE International Realtime System Symposium, pages 22-29,December 1996**.**

**[2]** S. Baruah,D.Chen,S.Gorinsky,A.Mok. Generalized multiframe tasks. 1996**.**

**Revendications**

1.  Procédé d'ordonnancement à priorité dynamique temps-réel d'une application exécutée sur un nombre p, au moins égal à 1, de processeurs, la dite application étant composée d'une pluralité m de tâches logicielles exécutant au moins un traitement sur une pluralité N de trames de données successives, chacune desdites tâches i étant définies au moins, pour chacune desdites trames j, par un temps d'exécution $C_i^{\,j}$ , une échéance d'exécution $D_i^{\,j}$ et un temps de garde $P_j$ vis-à-vis de la trame j+1 suivante, ledit temps de garde $P_j$ étant supérieur ou égal à ladite échéance $D_i^{\,j}$, ledit procédé étant **caractérisé en ce qu'**il comprend au moins les étapes suivantes:

○ Pour chaque tâche i, calculer les rapports $\dfrac{C_i^{\,j}}{D_i^{\,j}}$ entre le temps d'exécution $C_i^{\,j}$ de chaque trame j et l'échéance correspondante $D_i^{\,j}$,

○ Pour chaque tâche i, rechercher le maximum sur l'ensemble desdites trames j desdits rapports $\max(\dfrac{C_i^{\,j}}{D_i^{\,j}})$,

○ Comparer la somme $\sum_{i=0}^{m-1} \max_{0 \le j \le N-1} (\dfrac{C_i^{\,j}}{D_i^{\,j}})$ sur toutes lesdites tâches i desdits maximums au nombre p de processeurs fonctionnant en parallèle sur lesquels la charge de calcul totale de ladite application temps-réelle est répartie,

○ Si ladite somme $\sum_{i=0}^{m-1} \max_{0 \le j \le N-1} (\dfrac{C_i^{\,j}}{D_i^{\,j}})$ est inférieure ou égale au nombre p de processeurs alors conclure à la faisabilité de l'exécution temps-réelle de l'ensemble desdites tâches logicielles réparties sur lesdits processeurs et associer une priorité dynamique d'exécution à la tâche i en fonction de son échéance d'exécution $D_i^{\,j}$ de façon à ce qu'à un instant donné, la tâche qui possède la priorité la plus élevée est celle dont l'échéance $D_i^{\,j}$ est la plus proche temporellement,

○ Si ladite somme $\sum_{i=0}^{m-1} \max_{0 \le j \le N-1} (\dfrac{C_i^{\,j}}{D_i^{\,j}})$ est strictement supérieure au nombre p de processeurs, rejeter la tâche i et/ou redéfinir ses paramètres de temps d'exécution $C_i^{\,j}$ et d'échéance d'exécution $D_i^{\,j}$ de façon à satisfaire l'inégalité $\sum_{i=0}^{m-1} \max_{0 \le j \le N-1} (\dfrac{C_i^{\,j}}{D_i^{\,j}}) \le p$.

**2.** Procédé d'ordonnancement selon la revendication 1 **caractérisé en ce que** lesdites trames de données sont séquencées dans un ordre aléatoire et sans respecter un motif temporel cyclique.

**3.** Procédé d'ordonnancement selon l'une des revendications 1 à 2 **caractérisé en ce que** lesdites tâches exécutent sur lesdites trames de données des fonctions de traitement de signal et que lesdits processeurs sont des processeurs numériques de signal (DSP).

**4.** Procédé d'ordonnancement selon l'une des revendications 1 à 3 **caractérisé en ce qu'**un seul processeur à fréquence variable est utilisé et que ledit procédé comporte en plus les étapes suivantes :

○ Si l'inégalité suivante $\sum_{i=0}^{m-1} \max_{0 \le j \le N-1} (\dfrac{C_i^{\,j}}{D_i^{\,j}}) \le 1$ n'est pas respectée alors multiplier par un facteur δ au moins égal à $\sum_{i=0}^{m-1} \max_{0 \le j \le N-1} (\frac{C_i^j}{D_i^j})$ la fréquence dudit processeur,

◦ Si ladite fréquence multipliée par ledit facteur δ est inférieure ou égale à la fréquence maximale de fonctionnement dudit processeur alors associer une priorité dynamique d'exécution à la tâche i en fonction de son échéance d'exécution $D_i^j$ de façon à ce qu'à un instant donné, la tâche qui possède la priorité la plus élevée est celle dont l'échéance $D_i^j$ est la plus proche temporellement,

◦ Si ladite fréquence multipliée par ledit facteur δ est supérieure à la fréquence maximale de fonctionnement dudit processeur alors rejeter la tâche i et/ou redéfinir ses paramètres de temps d'exécution $C_i^j$ et d'échéance d'exécution $D_i^j$ de façon à satisfaire l'inégalité $\sum_{i=0}^{m-1} \max_{0 \le j \le N-1} (\frac{C_i^j}{D_i^j}) \le 1$.

**5.** Dispositif d'ordonnancement (501) pour une application temps-réelle (503,504) exécutée sur au moins un processeur à fréquence de fonctionnement fixe ou variable, la dite application étant composée d'une pluralité m de tâches logicielles exécutant au moins une fonction sur une pluralité N de trames de données successives, ledit dispositif (501) étant **caractérisé en ce qu'**il comporte des moyens pour mettre en oeuvre le procédé d'ordonnancement selon l'une des revendications 1 à 4.


**Patentansprüche**

**1.** Verfahren zur dynamischen Echtzeit-Prioritätsplanung einer Anwendung, die auf einer Anzahl p von Prozessoren, wenigstens gleich 1, ausgeführt ist, wobei die Anwendung aus einer Mehrzahl m von Software-Aufgaben besteht, die wenigstens einen Verarbeitungsvorgang an einer Mehrzahl N von aufeinander folgenden Daten-Frames ausführen, wobei jede der Aufgaben i wenigstens teilweise, für jeden der Frames j, durch eine Ausführungszeit $C_i^j$, eine Ausführungsfrist $D_i^j$ und eine Schutzzeit $P_i^j$ mit Bezug auf den nächsten Frame j+1 definiert ist, wobei die Schutzzeit $P_i^j$ gleich oder größer als die Frist $D_i^j$ ist, wobei das Verfahren **dadurch gekennzeichnet ist, dass** es wenigstens die folgenden Schritte beinhaltet:

◦ Berechnen, für jede Aufgabe i, der Verhältnisse $\frac{C_i^j}{D_i^j}$ zwischen der Ausführungszeit $C_i^j$ jedes Frame j und der entsprechenden Frist $D_i^j$;

◦ Suchen, für jede Aufgabe i, des Maximums $\max(\frac{C_i^j}{D_i^j})$ der Verhältnisse über alle Frames j;

◦ Vergleichen der Summe $\sum_{i=0}^{m-1} \max_{0 \le j \le N-1} (\frac{C_i^j}{D_i^j})$ über alle Aufgaben i der Maxima mit der Anzahl p von parallel arbeitenden Prozessoren, über die die Gesamtrechenlast der Echtzeit-Anwendung verteilt ist;

◦ wenn die Summe $\sum_{i=0}^{m-1} \max_{0 \le j \le N-1} (\frac{C_i^j}{D_i^j})$ gleich oder kleiner ist als die Anzahl p von Prozessoren, dann Feststellen der Durchführbarkeit der Echtzeit-Ausführung aller über die Prozessoren verteilten Software-Aufgaben und Assoziieren einer dynamischen Ausführungspriorität mit der Aufgabe i in Abhängigkeit von ihrer Ausführungsfrist $D_i^j$, so dass zu einem gegebenen Zeitpunkt die Aufgabe mit der höchsten Priorität die Aufgabe ist, deren Frist $D_i^j$ zeitlich am nächsten liegt;

◦ wenn die Summe $\sum\limits_{i=0}^{m-1} \max\limits_{0 \le j \le N-1} (\frac{C_i^j}{D_i^j})$ strikt größer ist als die Anzahl p von Prozessoren, Zurückweisen der Aufgabe i und/oder Umdefinieren ihrer Parameter Ausführungszeit $C_i^j$ und Ausführungsfrist $D_i^j$, um die

Ungleichung $\sum\limits_{i=0}^{m-1} \max\limits_{0 \le j \le N-1} (\frac{C_i^j}{D_i^j}) \le p$ zu erfüllen.

2. Planungsverfahren nach Anspruch 1, **dadurch gekennzeichnet, dass** die Daten-Frames in einer zufälligen Reihenfolge und ohne Einhaltung eines zyklischen Zeitmusters sequenziert werden.

3. Planungsverfahren nach einem der Ansprüche 1 bis 2, **dadurch gekennzeichnet, dass** die Aufgaben an den Daten-Frames Signalverarbeitungsfunktionen ausführen, und dadurch, dass die Prozessoren Digitalsignalprozessoren (DSP) sind.

4. Planungsverfahren nach einem der Ansprüche 1 bis 3, **dadurch gekennzeichnet, dass** ein einziger Prozessor mit variabler Frequenz benutzt wird, und dadurch, dass das Verfahren ferner die folgenden Schritte beinhaltet:

◦ wenn die folgende Ungleichung $\sum\limits_{i=0}^{m-1} \max\limits_{0 \le j \le N-1} (\frac{C_i^j}{D_i^j}) \le 1$ nicht erfüllt wird, dann Multiplizieren der Frequenz des Prozessors um einen Faktor δ von wenigstens gleich $\sum\limits_{i=0}^{m-1} \max\limits_{0 \le j \le N-1} (\frac{C_i^j}{D_i^j})$ ;

◦ wenn die um den Faktor δ multiplizierte Frequenz gleich oder kleiner ist als die maximale Betriebsfrequenz des Prozessors, dann Assoziieren einer dynamischen Ausführungspriorität mit der Aufgabe i in Abhängigkeit von ihrer Ausführungsfrist $D_i^j$, so dass zu einem gegebenen Zeitpunkt die Aufgabe mit der höchsten Priorität die Aufgabe ist, deren Frist $D_i^j$ zeitlich am nächsten liegt;

◦ wenn die mit dem Faktor δ multiplizierte Frequenz größer ist als die maximale Betriebsfrequenz des Prozessors, dann Zurückweisen der Aufgabe i und/oder Umdefinieren ihrer Parameter Ausführungszeit $C_i^j$ und Ausführungsfrist $D_i^j$, um die Ungleichung $\sum\limits_{i=0}^{m-1} \max\limits_{0 \le j \le N-1} (\frac{C_i^j}{D_i^j}) \le 1$ zu erfüllen.

5. Planungsvorrichtung (501) für eine Echtzeit-Anwendung (503, 504), ausgeführt auf wenigstens einem Prozessor mit fester oder variabler Betriebsfrequenz, wobei die Anwendung aus einer Mehrzahl m von Software-Aufgaben besteht, die wenigstens eine Funktion an einer Mehrzahl N von aufeinander folgenden Daten-Frames ausführen, wobei die Vorrichtung (501) **dadurch gekennzeichnet ist, dass** sie Mittel zum Implementieren des Planungsverfahrens nach einem der Ansprüche 1 bis 4 umfasst.

**Claims**

1. A method for the real-time dynamic priority scheduling of an application executed on a number p of processors, at least equal to 1, said application being made up of a plurality m of software tasks executing at least one processing operation on a plurality N of successive data frames, each of said tasks i being at least defined, for each of said frames j, by an execution time $C_i^j$, an execution deadline $D_i^j$ and a guard time $P_i^j$ with respect to the next frame j+1, said guard time $P_i^j$ being greater than or equal to said deadline $D_i^j$, said method being **characterised in that** it comprises at least the following steps:

◦ computing, for each task i, the ratios $\frac{C_i^j}{D_i^j}$ between the execution time $C_i^j$ of each frame j and the corresponding deadline $D_i^{\ j}$;

○ finding, for each task i, the maximum $\max(\dfrac{C_i^{\ j}}{D_i^{\ j}})$ of said ratios over all of said frames j;

○ comparing the sum $\displaystyle\sum_{i=0}^{m-1} \max_{0 \leq j \leq N-1} (\dfrac{C_i^{\ j}}{D_i^{\ j}})$ over all of said tasks i of said maximums to the number p of processors operating in parallel, over which the total computation load of said real-time application is distributed;

○ if said sum $\displaystyle\sum_{i=0}^{m-1} \max_{0 \leq j \leq N-1} (\dfrac{C_i^{\ j}}{D_i^{\ j}})$ is less than or equal to the number p of processors, then deducing the feasibility of the real-time execution of all of said software tasks distributed over said processors and associating a dynamic execution priority with the task i as a function of its execution deadline $D_i^{\ j}$ so that, at a given instant, the task with the highest priority is the task for which the deadline $D_i^{\ j}$ is temporally closest;

○ if said sum $\displaystyle\sum_{i=0}^{m-1} \max_{0 \leq j \leq N-1} (\dfrac{C_i^{\ j}}{D_i^{\ j}})$ is strictly greater than the number p of processors, rejecting the task i and/or redefining its execution time $C_i^{\ j}$ and execution deadline $D_i^{\ j}$ parameters so as to meet the inequality

$$\sum_{i=0}^{m-1} \max_{0 \leq j \leq N-1} (\dfrac{C_i^{\ j}}{D_i^{\ j}}) \leq p \quad.$$

2. The scheduling method according to claim 1, **characterised in that** said data frames are sequenced in a random order and without following a cyclical time pattern.

3. The scheduling method according to any one of claims 1 to 2, **characterised in that** said tasks execute, on said data frames, signal processing functions and **in that** said processors are digital signal processors (DSP).

4. The scheduling method according to any one of claims 1 to 3, **characterised in that** a single variable frequency processor is used and **in that** said method further comprises the following steps:

○ if the following inequality $\displaystyle\sum_{i=0}^{m-1} \max_{0 \leq j \leq N-1} (\dfrac{C_i^{\ j}}{D_i^{\ j}}) \leq 1$ is not met, then multiplying the frequency of said processor by a factor δ at least equal to $\displaystyle\sum_{i=0}^{m-1} \max_{0 \leq j \leq N-1} (\dfrac{C_i^{\ j}}{D_i^{\ j}})$;

○ if said frequency multiplied by said factor δ is less than or equal to the maximum operating frequency of said processor, then associating a dynamic execution priority with the task i as a function of its execution deadline $D_i^{\ j}$ so that, at a given instant, the task with the highest priority is the task for which the deadline $D_i^{\ j}$ is temporally closest;

○ if said frequency multiplied by said factor δ is greater than the maximum operating frequency of said processor, then rejecting the task i and/or redefining its execution time $C_i^{\ j}$ and execution deadline $D_i^{\ j}$ parameters so as to meet the inequality

$$\sum_{i=0}^{m-1} \max_{0 \leq j \leq N-1} (\dfrac{C_i^{\ j}}{D_i^{\ j}}) \leq 1 \quad.$$

5. A scheduling device (501) for a real-time application (503, 504) executed on at least one fixed or variable operating frequency processor, said application being made up of a plurality m of software tasks executing at least one function on a plurality N of successive data frames, said device (501) being **characterised in that** it comprises means for implementing the scheduling method according to any one of claims 1 to 4.

**FIG.1**

**FIG.2**

EP 2 476 056 B1

Spécifications
système
**301**

Caractérisation
processeur
**302**

Définition tâches
**303**

$C_i^j, D_i^j, P_i^j$

**306**

Test de faisabilité
**304**

Décision

**FIG.3**

EP 2 476 056 B1

P₁                           P₀                           P₂

FIG.4

FIG.5

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **ABDELZAHER T F et al.** A utilization bound for aperiodic tasks and priority driven scheduling. *IEEE transaction on computers,* Mars 2004
- **ALBERS K et al.** An event stream driven approximation for the analysis of real time systems. *Proceedings of the euromicro conference on real time systems,* Juin 2004

- **TAKADA H et al.** schedulability of generalized multiframe task sets under static priority assignment. *Real Time computing systems and applications,* 1997
- **A.K.MOK ; D.CHEN.** A multiframe model for real time tasks. *Proceedings of IEEE International Realtime System Symposium,* Décembre 1996, 22-29
- **S. BARUAH ; D.CHEN ; S.GORINSKY ; A.MOK.** *Generalized multiframe tasks,* 1996